Europäisches Patentamt

European Patent Office

Office européen des brevets

(19)

(11) Veröffentlichungsnummer: **0 444 442 A2**

## (12) EUROPÄISCHE PATENTANMELDUNG

(21) Anmeldenummer: 91101540.2

(22) Anmeldetag: 05.02.91

(51) Int. Cl.5: **H01S 3/03**

(30) Priorität: 01.03.90 DE 4006460

(43) Veröffentlichungstag der Anmeldung:
04.09.91 Patentblatt 91/36

(84) Benannte Vertragsstaaten:
**DE FR GB IT**

(71) Anmelder: **Siemens Aktiengesellschaft**
**Wittelsbacherplatz 2**
**W-8000 München 2(DE)**

(72) Erfinder: **Krüger, Hans, Dipl.-Phys.**
**Peralohstrasse 13**
**W-8000 München 83(DE)**
Erfinder: **Weber, Hubert, Dipl.-Phys.**
**Bahnhofstrasse 26**
**W-8900 Augsburg(DE)**

(54) **CO- oder CO2-Wellenleiterlaser.**

(57) In einem CO- oder $CO_2$-Welleneleiterlaser vom Sealed-Off-Typ mit transversaler Anregung wird eine Erhöhung der Lebensdauer erreicht, indem die Elektroden 1 und 2 aus Metall, die als Wellenleiterflächen dienen, mit einer gegen Oxidation durch das angrenzende Plasma unempfindlichen Schicht mit einer für die Wellenleitung ausreichend geringen Rauhigkeit überzogen sind.

Die Erfindung läßt sich für $CO_2$-Bandleiterlaser besonders vorteilhaft einsetzen.

FIG 2

EP 0 444 442 A2

Die Erfindung betrifft einen CO- oder $CO_2$-Wellenleiterlaser nach dem Oberbegriff des Patentanspruchs 1. Ein derartiger Laser ist aus IEEE Journal of Quantum Electronics, Vol.QE 20, No. 3, März 1984 bekannt. Dort werden zwei Aluminium-Elektroden aus poliertem Aluminium eingesetzt. Aluminium reagiert jedoch ebenso wie viele andere Metalle mit dem Sauerstoff des Plasmas eines CO- oder $CO_2$-Wellenleiterlasers. Es hat sich herausgestellt, daß dadurch der Sauerstoffgehalt in einem Sealed-Off-Laser über lange Zeit stetig reduziert wird, so daß sich die Laserdaten verändern und die Lebensdauer nicht den Erwartungen entspricht. Dabei führt auch die Bildung von Aluminiumoxid unter den Bedingungen der Laserentladung nicht oder zumindest nicht in ausreichend kurzer Zeit zu einer dichten, unempfindlichen Schicht von Aluminiumoxid.

Die Aufgabe, die der vorliegenden Erfindung zugrundeliegt, besteht bei einem Laser gemäß dem Oberbegriff in der Erhöhung der Lebensdauer ohne Qualitätseinbußen. Dies wird durch die kennzeichnenden Merkmale des Patentanspruchs 1 gelöst.

Als gegen Oxidation durch das angrenzende Plasma unempfindliche Schichten eignen sich passivierte, d.h. sich bei Einwirkung von ionisiertem Sauerstoff oder Laserplasma nicht mehr nennenswert verändernde Schichten aus Aluminium, Chrom, Nickel oder Schichten aus oder Edelmetallen, insbesondere Gold, Platin, Palladium. Diese Schichten können mit hoher Qualität und hoher Oberflächenglätte hergestellt werden. Bei Verwendung von Aluminiumschichten empfiehlt es sich, daß das Aluminium in Form von Reinstaluminium aufgebracht ist. Reinstaluminium läßt sich sehr gut glätten und ergibt bei der Oxidation dichte und glatte Oxidschichten, die die Wellenleitereigenschaften nicht beeinträchtigen. Darum sind gerade diese Schichten für die Passivierung durch eine Alumioxidschicht geeignet, wobei diese unter 1 $\mu$m stark sein soll, um die unvermeidlichen Verluste durch die Wellenleitung nicht durch Rauhigkeit zu erhöhen.

Die Elektroden werden zweckmäßig aus gutbearbeitbarem und gut wärmeleitendem Material hergestellt, insbesondere eignen sich Kupfer oder Aluminium. Verwendet man Aluminiumlegierungen als Elektrodenmaterial, dann empfiehlt es sich, daß darauf zunächst eine Schicht aus Nickel und dann eine Schicht aus Reinstaluminium aufgebracht ist und daß die Reinstaluminiumschicht auf der freiliegenden Oberfläche mit einer Passivierungsschicht der genannten Art überzogen ist. So werden rauhe Schichten, die sich bei Aluminiumlegierungen gerne bilden, vermieden und auch für lange Zeit oxidationsbeständige Schichten erreicht.

Besonders vorteilhaft ist der Wellenleiterlaser als Slab- oder Bandleiterlaser aufgebaut. Bei derartigen Lasern ist die Wandbelastung durch das Plasma relativ groß, der Nutzeffekt durch die vorgeschlagene Passivierung besonders hoch. Dabei läßt sich ein besonders kostengünstiger Aufbau erreichen, indem zwischen die beschichteten Elektroden Keramikstreifen eingelötet sind, die als seitliche Begrenzung des Plasmaraumes und als Abstandshalter für Elektroden dienen. Dieses Einlöten der Streifen wird durch die aufgebrachten Passivierungsschichten begünstigt, eine zusätzliche Aufbringung von Kontaktschichten, wie sie beim Verlöten mit Keramikteilen sonst üblich ist, kann entfallen.

Die Erfindung wird nun anhand von zwei Figuren näher erläutert. Sie ist nicht auf das in den Figuren gezeigte Beispiel beschränkt. Die Figuren zeigen einen Schnitt und eine Draufsicht auf einen erfindungsgemäßen Wellenleiterlaser.

Zwei Elektroden 1 und 2 eines Wellenleiterlasers sind mit Pasivierungsschichten 3 versehen, die an den Plasmaraum 8 angrenzen. Zwei Keramikstreifen 4 sind zwischen den Passivierungsschichten 3 auf den Elektroden 1 bzw. 2 eingelötet und dienen als Abstandshalter für die Elektroden und als Abschluß des Plasmaraumes 8. Die Passivierungsschichten 3 sind gegen Oxidation durch das Plasma im Plasmaraum 8 unempfindlich. Dadurch wird das Gleichgewicht der Ionen im Plasma über lange Zeit erhalten, der Laser kann die üblichen Forderungen an die Lebensdauer, beispielsweise eine Lebensdauer von fünftausend Stunden, erfüllen.

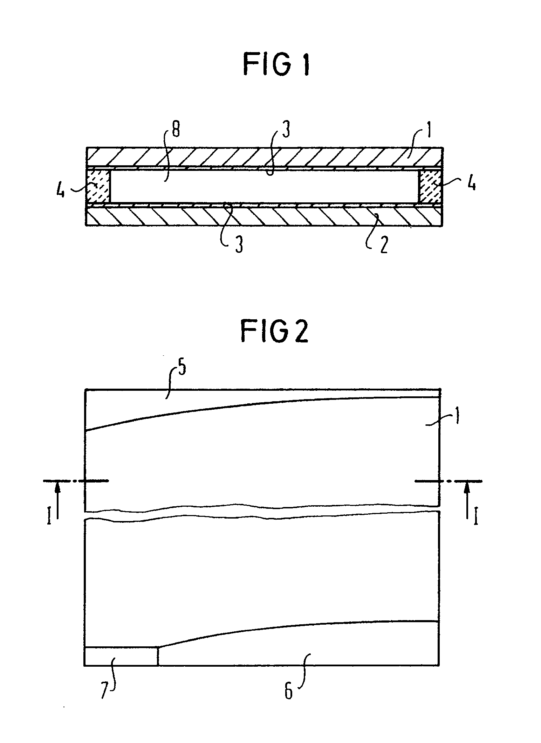

Im gezeigten Beispiel gemäß FIG 2 handelt es sich um einen Bandleiterlaser mit instabilem Resonator, wobei der Resonator durch die Spiegel 5 und 6 gebildet ist und ein Strahlaustrittsfenster 7 an den Spiegel 6 angrenzend angeordnet ist. Bei einem derartigen, an sich bekannten Laseraufbau ist die Wandbelastung relativ hoch, der Vorteil der vorliegenden Erfindung kommt besonders deutlich zum Tragen.

**Patentansprüche**

1. CO- oder $CO_2$-Wellenleiterlaser vom Sealed-Off-Typ mit transversaler Anregung, welcher zwei Metallelektroden enthält, die als Wellenleiterflächen dienen und voneinander durch Isolierstoffstreifen getrennt sind, **dadurch gekennzeichnet,** daß die Elektroden mit einer gegen Oxidation durch das angrenzende Plasma unempfindlichen Schicht mit einer für die Wellenleitung nicht störenden, geringen Rauhigkeit überzogen ("passiviert") sind.

2. Wellenleiterlaser nach Anspruch 1, **dadurch gekennzeichnet,** daß die Elektroden mit einer Schicht aus passiviertem Al, Cr, Ni oder aus Edelmetallen, insbesondere Gold, Pt, Pd überzogen sind.

3. Wellenleiterlaser nach Anspruch 2, **dadurch gekennzeichnet,** daß Aluminium in Form von Reinstaluminium aufgebracht ist.

4. Wellenleiterlaser nach Anspruch 3, **dadurch gekennzeichnet,** daß die Elektroden aus Aluminium bestehen, mit Aluminiumoxid überzogen und geglättet sind und daß die Aluminiumoxidschicht höchstens etwa 1 $\mu$m stark ist.

5. Wellenleiterlaser nach einem der Ansprüche 1 oder 2, **dadurch gekennzeichnet,** daß die Elektroden aus passiviertem Kupfer oder Aluminium bestehen.

6. Wellenleiterlaser nach einem der Ansprüche 1 bis 2, **dadurch gekennzeichnet,** daß die Elektroden aus Aluminiumlegierungen bestehen, daß darauf zumindest eine Schicht aus Nickel und dann eine Schicht aus Reinstalumainium aufgebracht ist und daß das Reinstaluminium auf der freiliegenden Oberfläche mit einer Passivierungsschicht überzogen ist.

7. Wellenleiterlaser nach einem der Ansprüche 1 bis 6, **dadurch gekennzeichnet,** daß er als Slab- oder Bandleiterlaser ausgebildet ist.

8. Wellenleiterlaser nach Anspruch 7, **dadurch gekennzeichnet,** daß zwischen den beschichteten Elektroden Keramikstreifen eingelötet sind, die als Seitenbegrenzung des Plasmaraumes und als Abstandshalter für die Elektroden dienen.

## FIG 1

## FIG 2